Europäisches Patentamt

European Patent Office

Office européen des brevets

(11) Veröffentlichungsnummer: **0 452 545 A1**

## (12) EUROPÄISCHE PATENTANMELDUNG

(21) Anmeldenummer: 90122161.4

(22) Anmeldetag: 20.11.90

(51) Int. Cl.5: **B60S 3/06**, D04H 1/42, D04H 1/48, D04H 1/64

(30) Priorität: 14.04.90 DE 4012159

(43) Veröffentlichungstag der Anmeldung:
23.10.91 Patentblatt 91/43

(84) Benannte Vertragsstaaten:
AT BE CH DE DK ES FR GB GR IT LI LU NL SE

(71) Anmelder: **Firma Carl Freudenberg**
**Höhnerweg 2-4**
**W-6940 Weinheim/Bergstrasse(DE)**

(72) Erfinder: **Laun, Heinrich**
**Fichtelbachstrasse 8**
**W-8900 Augsburg(DE)**
Erfinder: **Pässler, Michel, Dr.**
**Leonhard Hüttenhofer-Strasse 8**
**W-8902 Neusäss(DE)**

(54) Reinigungskörper aus Vliesstoff für Autowaschanlagen.

(57) Ein Reinigungskörper aus Vliesstoff für Autowaschanlagen in Platten- oder Streifenform besteht aus einem Polyamid- oder Polyester-Vliesstoff mit einem Fasertiter von 8 bis 300 dtex. Die Fasern sind durch ein elastisches Polymerbindemittel verfestigt. Der Vliesstoffkörper besteht zu 65 bis 99 % aus Luft und besitzt ein Fertiggewicht zwischen 100 und 2000 g/m².

EP 0 452 545 A1

Die Erfindung betrifft Reinigungskörper aus Vliesstoff für Autowaschanlagen.

Am häufigsten werden in Autowaschanlagen rotierende Bürsten eingesetzt. Diese bestehen aus Walzenkörpern, die eng mit monofilen Synthesefasern bestückt sind. Durch das Drehen der Walzen stellen sich die Monofile auf; die Walzen werden sodann mit kontrolliertem Anpreßdruck an die Karosserie angefahren, wobei Wasser aufgeprüht wird.

Diese Bürstenwalzen verursachen deutliche Kratzer auf den Lackoberflächen der Karosserien, und dies auch, wenn die einzelnen Monofile aufgespleißt sind.

Um diesen Nachteil zu umgehen, wurden bereits - insbesondere in den USA - borstenfreie oder bürstenfreie Reinigungsanlagen erstellt. Die Reinigungskörper bestehen dabei aus textilen Medien, wie Gewebe, Gewirke, Vliesstoffe oder Kombinationen daraus, welche überwiegend aus synthetischen Fasern bestehen.

Nachteilig sind hierbei das hohe Gewicht, das geringe Volumen, die fehlende Elastizität, die geringe innere Oberfläche und insbesondere die starke Geräuschentwicklung bei Einwirkung auf die Karosserie.

Die geschlossene Oberfläche und das fehlende innere Volumen der textilen Reinigungskörper wirken sich derart aus, daß sie nur äußerst geringe Mengen von Schmutzpartikeln aufnehmen können. Insbesondere bei stärker verschmutzten Fahrzeugen verschmieren deshalb die textilen Oberflächen sehr schnell und rutschen dann wirkungslos über die Karosserie.

Der aufgenommene Schmutz wird andererseits wegen der Feinporosität des Materials nur schwer wieder abgegeben, d.h., es kann sich unmittelbar unter der Oberfläche im Material ein Besatz an feinem Sand aufbauen, der scheuernd auf den Lack einwirkt.

Borstenfreie Reinigungskörper:

Auf die Walzenkörper werden anstelle der Borsten die erwähnten Textilmaterialien in Plattenform aufgebracht. Dabei sind diese auf der Arbeitsseite in Abständen von 1 bis 5 cm ca. 30 bis 40 cm tief eingeschnitten. Durch das Rotieren der Walze stellen sich die Textilplatten auf.

Bürstenfreie Reinigungskörper:

Hierbei wird auf Walzenkörper verzichtet. Die Textilien werden als 60 bis 200 mm breite, bis zu 2200 mm lange Streifen auf Gatter aufgereiht, die in der Horizontalen schwingen und die Streifen über die Karosserie ziehen. Es ist auch möglich, die Streifen auf Drehteller aufzuziehen, welche in der Horizontalen rotieren.

Die vorliegende Erfindung hat zur Aufgabe, Reinigungskörper der im Oberbegriff des ersten Patentanspruchs genannten Art derart weiter zu entwickeln, die die Nachteile insbesondere bezüglich des hohen Gewichts, der geringen Aufnahmekapazität für Schmutz und der geringen Elastizität vermeiden.

Die Lösung dieser Aufgabe besteht in einem Reinigungskörper mit den kennzeichnenden Merkmalen des ersten Patentanspruchs. Bevorzugte Ausgestaltungen werden in den Unteransprüchen aufgezeigt.

Der erfindungsgemäße Vliesstoff besitzt eine sehr grobe Porosität, eine rauhe, aber abriebfeste Oberfläche mit Oberflächenhaftung im nassen Zustand gegenüber glatten Flächen und eine hohe Elastizität bei hoher innerer Oberfläche.

Als Fasermaterial verwendet man zweckmäßig verrottungsfeste Synthesefasern, bevorzugt aus Polyamid oder Polyester. Um eine hohe Porosität und ein hohes inneres Volumen zu erzielen, werden Grobfasern im Titerbereich zwischen 8 und 300 dtex verwendet. Dadurch wird ein Luftanteil im Innern des Reinigungskörpers von 65 bis 99 Vol. % erzielt. Dieses hohe innere Volumen und die Gewebestruktur ermöglichen eine gute Schmutzaufnahme und auch eine leichte Abgabe des Schmutzes an durchlaufendes Wasser.

Der Vliesstoff wird zweckmäßig über Krempeln oder im Luftlegeverfahren in bekannter Weise hergestellt. Dieses Herstellungsverfahren ist nicht Gegenstand der vorliegenden Patentanmeldung.

Als Binder können alle bekannten wasserfesten, elastischen Polymeren, bevorzugt Synthesekautschuk- oder Acrylatdispersionen, verwendet werden. Der Binder ist nach allen bekannten Methoden einzuimprägnieren, z.B. zwischen zwei Walzen; man kann ihn aber auch durch beidseitiges Besprühen auf das Vlies aufbringen.

Das Faser/Binder-Verhältnis kann variiert werden zwischen 90/10 und 20/80. Die Fertiggewichte des erfindungsgemäßen Vliesstoffs liegen vorteilhafterweise zwischen 100 und 2000 g/m².

Durch mechanische Verfestigung wie z.B. durch Nadeln, oder durch die Zugabe von Schmelzfasern in die Fasermischung ist es möglich, die Spaltfestigkeit des Vliesstoffs zu erhöhen.

Die Zugfestigkeiten können durch die Einarbeitung eines Geleges erhöht werden. Durch die gleiche Maßnahme wird die Zugdehnung bei Bedarf herabgesetzt.

Weiterhin ist es möglich, zwei oder mehrere, bevorzugt bis zu drei, Lagen dieses Vliesstoffs unter Verwendung der bekannten, wasserfesten Haftmassen und Fertigungsmethoden zu kaschieren. Solche Haftmassen sind Haftvliese aus thermoplastisch erweichbaren Fasern, thermoplastische Haftfolien, thermoplastische Puder oder Schmelzkleber. Dabei ist darauf zu achten, daß die Porosität des Laminats weitgehend beibehalten wird.

**Patentansprüche**

1. Reinigungskörper aus Vliesstoff für Autowaschanlagen in Platten- oder Streifenform, dadurch gekennzeichnet, daß die Vliesstoffasern aus Polyamid oder Polyester bestehen, einen Titer von 8 bis 300 dtex besitzen und mit elastischem polymerem Bindemittel verfestigt sind, daß das Fertiggewicht des Vliesstoffs zwischen 100 und 2000 g/m$^2$ beträgt, daß das Vliesstoffvolumen zu 65 bis 99 % aus Luft besteht und daß das Verhältnis Faser/Bindemittel zwischen 90 : 10 und 20 : 80 beträgt.

2. Reinigungskörper nach Anspruch 1, dadurch gekennzeichnet, daß der Vliesstoff genadelt ist.

3. Reinigungskörper nach Anspruch 1, dadurch gekennzeichnet, daß der Vliesstoff zusätzlich durch thermoplastische Bindefasern gebunden ist.

4. Reinigungskörper nach einem der vorhergehenden Ansprüche, dadurch gekennzeichnet, daß er ein Gelege aus synthetischen Monofilamenten eingearbeitet enthält.

5. Reinigungskörper nach einem der vorhergehenden Ansprüche, dadurch gekennzeichnet, daß er aus bis zu drei Vliesstofflagen besteht, welche klebend miteinander verbunden sind.

Europäisches
Patentamt

EUROPÄISCHER
RECHERCHENBERICHT

Nummer der Anmeldung

EP 90 12 2161

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 377 878 (D.P. PECORA)<br>* Spalte 1, Zeile 49 - Spalte 6, Zeile 47; Ansprüche 1, 3; Figuren 1-8 *<br>– – – | 1 | B 60 S 3/06<br>D 04 H 1/42<br>D 04 H 1/48<br>D 04 H 1/64 |
| A | US-A-4 567 619 (G.J. CLARK)<br>* Spalte 1, Zeile 65 - Spalte 6, Zeile 57; Anspruch 1 *<br>– – – | 1,2,5 | |
| A | EP-A-0 198 712 (E.I.DU PONT DE NEMOURS)<br>* Seite 2, Zeile 15 - Seite 6, Zeile 28 * * Seite 16, Zeile 28 - Seite 17, Zeile 28; Ansprüche 1, 4, 5, 7 *<br>– – – | 1,3 | |
| A | DE-A-1 660 777 (A. KOGLIN ; H. REIMERS)<br>* Seite 1, Absatz 1 - Seite 5, Absatz 3 *<br>– – – | 1,2 | |
| A | GB-A-2 078 808 (SADAAKI TAGAKI)<br>* Seite 1, Zeile 31 - Seite 4, Zeile 25; Ansprüche 1-4, 8 *<br>– – – – – | 1,2 | |

|  | RECHERCHIERTE SACHGEBIETE (Int. Cl.5) |
|---|---|
|  | B 60 S<br>D 04 H |

Der vorliegende Recherchenbericht wurde für alle Patentansprüche erstellt

| Recherchenort | Abschlußdatum der Recherche | Prüfer |
|---|---|---|
| Den Haag | 19 April 91 | BLASBAND I. |